(19)

**Europäisches Patentamt**
**European Patent Office**
**Office européen des brevets**

(11) **EP 4 610 891 A1**

(12) **EUROPEAN PATENT APPLICATION**

(43) Date of publication:
**03.09.2025 Bulletin 2025/36**

(21) Application number: **25159658.1**

(22) Date of filing: **24.02.2025**

(51) International Patent Classification (IPC):
**G06N 5/01** *(2023.01)* **G06N 20/00** *(2019.01)*

(52) Cooperative Patent Classification (CPC):
**G06N 20/00; G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024 IN 202421015031**

(71) Applicant: **Tata Consultancy Services Limited Maharashtra (IN)**

(72) Inventors:
• **LING, Yibei**
  **Edison, 08837 (US)**
• **NJELITA, Charles**
  **Edison, 08837 (US)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **SYSTEMS AND METHODS FOR OPTIMIZING HYPERPARAMETERS OF MACHINE LEARNING MODELS USING REDUCTION ITERATION TECHNIQUES**

(57) The most fundamental task in ML models is to automate the setting of hyperparameters to optimize performance. Traditionally, in machine learning (ML) models hyperparameter optimization problem has been solved using brute-force techniques such as grid search, and the like. This strategy exponentially increases computation costs and memory overhead. Considering the complexity and variety of the ML models there still remains practical difficulties of selecting right combinations of hyperparameters to maximize performance of the ML models. Embodiments of the present disclosure provide systems and methods for hyperparameters optimization in machine learning models and to effectively reduce the hyperparameter search dimensions and identify the important hyperparameter dimensions that are high variable to identify the best hyperparameter thereby saving the computing energy of machine learning process and eliminate categorical dimensions by using a combination of reduction-iteration techniques.

receiving, via one or more hardware processors, a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension — 202

applying, a first reduction technique and a second reduction technique via the one or more hardware processors, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search space is based on the per iteration sample size — 204

iteratively applying, the first reduction technique and the second reduction technique via the one or more hardware processors, on the reduced hyper-dimensional search space comprising the second hyperparameter dimension to obtain an optimal set of hyperparameters,
until a difference of an associated best performance metric between a current iteration and a previous iteration of the ML model is less than or equal to the termination threshold — 206

**FIG. 2**

EP 4 610 891 A1

**Description**

CROSS-REFERENCE TO RELATED APPLICATIONS AND PRIORITY

The present application claims priority to Indian application no. 202421015031, filed on February 29, 2024.

TECHNICAL FIELD

The disclosure herein generally relates to optimization techniques, and, more particularly, to systems and methods for optimizing hyperparameters of machine learning models using reduction iteration techniques.

BACKGROUND

Machine learning (ML) models have been widely used in several applications and domains. This is due to their inherent generic nature and ability to demonstrate high performance. To fit a machine learning model into various problems, the hyperparameters must be tuned. Hyperparameter tuning process differs based on the ML model type, and associated hyperparameters.

The most fundamental task in ML models is to automate the setting of hyperparameters to optimize performance. Traditionally, in machine learning (ML) models hyperparameter optimization problem has been solved using brute-force techniques such as grid search, and the like. This strategy exponentially increases computation costs and memory overhead. To overcome the above challenges, Bayesian Optimization (BO) techniques were implemented while assuming a certain prior distribution over the cost function. Though the BO techniques are popular for its implementation, these are not stable in providing needed performance. Yet another traditional approach has been manual testing and tuning of hyperparameters. However, manual approach is ineffective for many problems due to various factors including iteration size that undergoes sampling during optimization process. Considering the complexity and variety of the ML models there still remains practical difficulties of selecting right combinations of hyperparameters to maximize performance of the ML models.

SUMMARY

Embodiments of the present disclosure present technological improvements as solutions to one or more of the above-mentioned technical problems recognized by the inventors in conventional systems. For example, in one aspect, there is provided a processor implemented method for optimizing hyperparameters of machine learning models using reduction iteration techniques. The method comprises receiving, via one or more hardware processors, a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension; applying, a first reduction technique and a second reduction technique via the one or more hardware processors, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search space is based on the per iteration sample size; and iteratively applying, the first reduction technique and the second reduction technique via the one or more hardware processors, on the reduced hyper-dimensional search space comprising the second hyperparameter dimension to obtain an optimal set of hyperparameters, until a difference of an associated best performance metric between a current iteration and a previous iteration of the ML model is less than or equal to the termination threshold.

In an embodiment, shrinkage of the hyper-dimensional search space between the current iteration and the previous iteration is at the rate of $(x/y)^d$ per-iteration, where d is a dimensionality of the second hyperparameter dimension, and x and y are integer values.

In an embodiment, the first reduction technique is a Dimension-Reduction Iteration (DRI) technique.

In an embodiment, the second reduction technique is a Volume-Reduction Iteration (VRI) technique.

In an embodiment, the first reduction technique and the second reduction technique are concurrently applied during each iteration.

In an embodiment, the first hyperparameter dimension is a categorical hyperparameter dimension, and the second hyperparameter dimension is a numerical hyperparameter dimension.

In another aspect, there is provided a processor implemented system for optimizing hyperparameters of machine learning models using reduction iteration techniques. The system comprises: a memory storing instructions; one or more communication interfaces; and one or more hardware processors coupled to the memory via the one or more communication interfaces, wherein the one or more hardware processors are configured by the instructions to: receive a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension; apply, a first reduction technique and a second reduction technique, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search space is based on the per iteration sample size; and iteratively apply, the first reduction technique and the second reduction technique, on the reduced hyper-dimensional search space comprising the second hyperparameter dimension to obtain an optimal set of hyperparameters, until a difference of an associated best performance metric between a current iteration and a previous iteration of the ML model is less than or equal to the termination threshold.

In an embodiment, shrinkage of the hyper-dimensional search space between the current iteration and the previous iteration is at the rate of $(x/y)^d$ per-iteration, where d is a dimensionality of the second hyperparameter dimension, and x and y are integer values.

In an embodiment, the first reduction technique is a Dimension-Reduction Iteration (DRI) technique.

In an embodiment, the second reduction technique is a Volume-Reduction Iteration (VRI) technique.

In an embodiment, the first reduction technique and the second reduction technique are concurrently applied during each iteration.

In an embodiment, the first hyperparameter dimension is a categorical hyperparameter dimension, and the second hyperparameter dimension is a numerical hyperparameter dimension.

In yet another aspect, there are provided one or more non-transitory machine-readable information storage mediums comprising one or more instructions which when executed by one or more hardware processors cause optimizing hyperparameters of machine learning models using reduction iteration techniques by receiving a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension; applying, a first reduction technique and a second reduction technique, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search spac4e is based on the per iteration sample size; and iteratively applying, the first reduction technique and the second reduction technique, on the reduced hyper-dimensional search space comprising the second hyperparameter dimension to obtain an optimal set of hyperparameters, until a difference of an associated best performance metric between a current iteration and a previous iteration of the ML model is less than or equal to the termination threshold.

In an embodiment, shrinkage of the hyper-dimensional search space between the current iteration and the previous iteration is at the rate of $(1/4)^d$ per-iteration, where d is a dimensionality of the second hyperparameter dimension, and x and y are integer values.

In an embodiment, the first reduction technique is a Dimension-Reduction Iteration (DRI) technique.

In an embodiment, the second reduction technique is a Volume-Reduction Iteration (VRI) technique.

In an embodiment, the first reduction technique and the second reduction technique are concurrently applied during each iteration.

In an embodiment, the first hyperparameter dimension is a categorical hyperparameter dimension, and the second hyperparameter dimension is a numerical hyperparameter dimension.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for optimizing hyperparameters of machine learning models using reduction iteration techniques, in accordance with an embodiment of the present disclosure.

FIG. 2 depicts an exemplary flow chart illustrating a method for optimizing hyperparameters of machine learning models using reduction iteration techniques, using the system of FIG. 1, in accordance with an embodiment of the present disclosure.

FIG. 3 depicts per-iteration volume shrinkage upon application of the first reduction technique and the second reduction technique on the hyperparameter space, in accordance with an embodiment of the present disclosure.

FIG. 4 depicts a graphical representation illustrating samples taking place in two consecutive iterations (left-side figure: dots representing the sampled points in the hyperparameter space, right-side figure: black dots representing the sampled points in the subsequent iteration), in accordance with an embodiment of the present disclosure.

FIGS. 5A and 5B depict a graphical representation illustrating performance comparison the method of FIG. 2 and conventional approaches (e.g., Hyperopt®, Optune®, Bayesian optimization, etc.), in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The most fundamental task in ML models is to automate the setting of hyperparameters to optimize performance. Traditionally, in machine learning (ML) models hyperparameter optimization problem has been solved using brute-force techniques such as grid search, and the like. This strategy exponentially increases computation costs and memory overhead. To overcome the above challenges, Bayesian Optimization (BO) techniques were implemented while assuming a certain prior distribution over the cost function. Though the BO techniques are popular for its implementation, these are not stable in providing needed performance. Yet another traditional approach has been manual testing and tuning of hyperparameters. However, manual approach is ineffective for many problems due to various factors including iteration size that undergoes sampling during optimization process. Considering the complexity and variety of the ML models there still remains practical difficulties of selecting right combinations of hyperparameters to maximize performance of the ML models.

Embodiments of the present disclosure provide systems and methods for hyperparameters optimization in machine learning. More specifically, the system and method make use of small random samples to effectively reduce the hyperparameter search dimensions and identify the important hyperparameter dimensions that are high variable to the best hyperparameter. The system then performs randomized search on the reduced important dimensions. As a result, the method of the present disclosure can efficiently identify the best hyperparameters, thereby saving the computing energy of machine learning process. The method of randomized grid search is to take random samples over the entire specified hyperparameter spaces (on the global scope). If the hyperparameter space is large, the system cannot find the best hyperparameter with small sample size. However, if sample size is very large, then it incurs a substantial computing resource in the search. As such the randomized grid search is ineffective in handling large hyperparameter space. To overcome the above challenges, the system and method of the present invention take a small number of samples on the high dimensional hyperparameter space to explore the location of the best optimal hyperparameter combination, and then makes use of the best hyperparameters in the sampled data to construct smaller hyper-parameter space and compares the best performance in the sampled data with the previous one. The process is performed in an iterative fashion, until the performance gain in two consecutive steps is less than a threshold.

More specifically, a dimension-volume-reduction iteration (DVRI) hyperparameter optimizer has been incorporated an auto-ML framework which plays an important role in reducing computational overhead and energy consumption as a byproduct.

The hyper-parameter optimization presents two primary challenges: Firstly, the hyper-parameter space, comprising mixed data types like categorical, float, and integer, is non-differentiable. Secondly, the hyper-parameter optimization is inherently non-convex. Consequently, randomized grid search is employed as an effective and robust means for hyperparameter optimization. The main objective of randomized grid search is to generate random combinations in the hyper-parameter space and select the best hyper-parameter combination. However, a key limitation of randomized hyper-parameter optimization is the need 1) to define the hyperparameter space where search initiates and 2) to determine a proper sample size for randomized search.

The dimensionality of hyperparameter space varies with models, can be as high as m-dimensional space. A small sample size often leads to sub-optimal or inferior performance for large and high-dimensional hyper-parameter space, whereas a large sample size consumes excessive computational resources and power consumption.

The uniqueness of this dimension and volume-reduction iteration method stems from a crucial observation: categorical hyper-parameters show significant variability in terms of their impact on the model's performance. Capitalizing on this characteristic, the method in each iteration employs small random samples to pinpoint the optimal values for these hyper-parameter dimensions. After identifying these values, these categorical dimensions are excluded from further exploration. For numerical hyper-parameters (integers and floats), the method similarly uses small random samples to locate potential areas where values for each dimension may exist. This technique effectively reduces the search space at a ratio of $(1/4)^d$ at each iteration, where d represents the dimensionality of the numerical hyper-parameters. A combination of dimension-reduction and volume-reduction iteration techniques turns out to be extremely efficient to identify the optimal hyper-parameter combination.

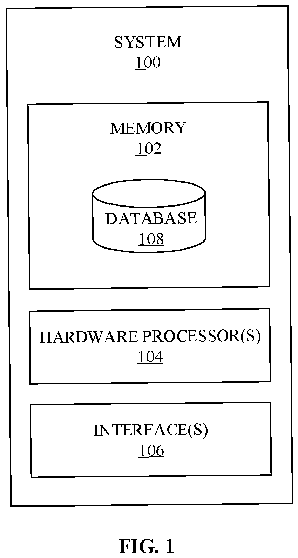

Referring now to the drawings, and more particularly to FIG. 1 through 5B, where similar reference characters denote corresponding features consistently throughout the figures, there are shown preferred embodiments and these embodiments are described in the context of the following exemplary system and/or method.

FIG. 1 depicts an exemplary system 100 for optimizing hyperparameters of machine learning models using reduction iteration techniques, in accordance with an embodiment of the present disclosure. **In** an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to machine learning model(s), associated hyper-dimensional search space, a per iteration sample size, one or more associated hyperparameter dimensions, and a termination threshold, and the like. The database 108 further comprises reduced hyper-dimensional search space comprising reduced hyperparameters set associated with a specific hyperparameter dimension, and the like. The memory 102 stores various techniques such as a first reduction technique and a second reduction technique which when executed by the system 100 enable to perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

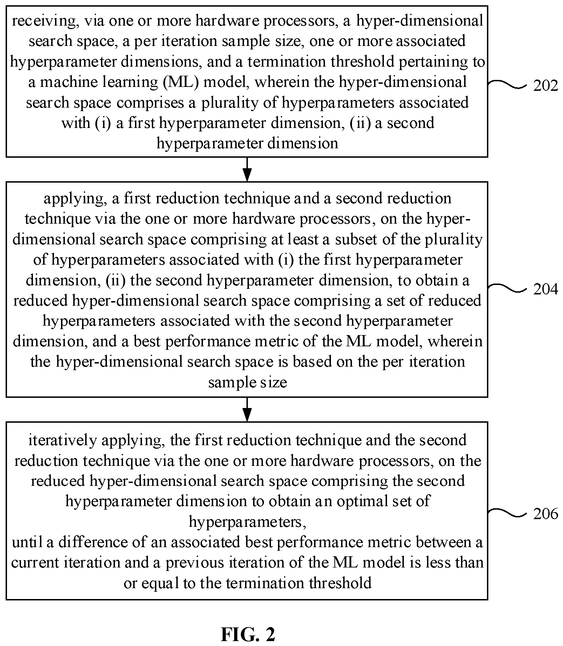

FIG. 2, with reference to FIG. 1, depicts an exemplary flow chart illustrating a method for optimizing hyperparameters of machine learning models using reduction iteration techniques, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. The method of FIG. 2 is also referred to as Dimension-Volume Reduction Iteration (DVRI) technique (or DVRI method) and interchangeably used herein.

At step 202 of the method of the present disclosure, the one or more hardware processors 104 receive a hyper-dimensional search space, a per iteration sample size, a plurality of associated hyperparameter dimensions, and a termination threshold pertaining to a machine learning (ML) model. The hyper-dimensional search space comprises a plurality of hyperparameters associated with (i) a first hyperparameter dimension, (ii) a second hyperparameter dimension amongst the plurality of associated hyperparameter dimensions. The hyper-dimensional space includes $[h_L^1, h_R^1], \cdots, [h_L^d, h_R^d]$, where the subscript L and R denote the left and right of the parameter interval. Other inputs received by the system 100 at step 202 includes a dataset *'D',* a per-iteration sample size *'N',* an associated hyperparameter dimension 'd', a termination threshold $\alpha = 0.01$. Additionally, the system 100 initializes a few parameters associated with the received input and the ML model, such as, but are not limited to, *g_params = None,* $p_{score} = 0$, $c_{score} = 0$, $g = 0$, and the like. The ML model comprises but is not limited to classification model(s) such as linear regression model, and so on. It is to be understood by a person having ordinary skill in the art or person skilled in the art that the above example of ML model as implemented by the system 100 and the method described herein shall not be construed as limiting the scope of the present disclosure. Below Table 1 illustrates hyperparameters and associated dimension(s) pertaining to the machine learning model by way of examples.

Table 1

| Hyperparameter | *Dimension type* | parameter range |
|---|---|---|
| Penalty | categorical | *l1, l2,elasticnet* |
| Tol | *numerical(float)* | $[0, \infty]$ |
| C | *numerical(float)* | $[0,1]$ |
| intercept_scaling | *numerical(float)* | $[-\infty, \infty]$ |
| Solver | *categorical* | *lbfgs, liblinear, newton-cg, newton-cholesky, sag, saga* |
| max_iter | *numerical(integer)* | $[0, \infty]$ |
| multi_class | *categorical* | *auto, ovr, multinomial* |
| l1_ratio | *numerical(float)* | $[0,1]$ |

The hyperparameter solver as comprised in the ML model and implemented by the system 100 has six categorical elements listed in Table 2, by way of examples.

Table 2

| Six solvers in the categorical *solver* hyper-parameter | | | | | |
|---|---|---|---|---|---|
| lbfgs | liblinear | newton-cg | newton-cholesky | sag | saga |

The hyper-parameter max_iter hyperparameter, which is the discrete type, refers to the maximum number of iterations taken for the solver to converge, and the hyper-parameter C, which is the continuous (floating) data type, refers to the inverse of regularization strength: The smaller the value of C, the stronger the regularization. These hyper-parameters are crucial in determining the performance of the ML model. For instance, a small max_iter value could cause a premature termination of ML model training process and yield a combination of hyperparameter point and a selection of solver that may affect the computational resource usage of a host machine (e.g., the system 100) and the performance of the ML model. The objective of hyperparameter optimization is to navigate the hyperparameter space and identify the optimal combination of hyperparameters that yield the best performance of a particular problem. In practice, the optimal hyperparameter is dataset-specific and thus unknown in advance. To get the optimal hyperparameter, one needs to search over large hyper-parameter space (the 8-dimensional hyper-parameter space in LogisticRegression model as an example), which incurs costly computational cost for search, particularly for a large dataset. On the other hand, searching through a small hyper-parameter space can be performed efficiently but produces an underperforming model. The system 100 and the method of the present disclosure efficiently navigate large hyper-parameter space and identify the optimal hyperparameter combination, while substantially reducing computational cost and energy consumption.

Referring to steps of FIG. 2, at step 204 of the method of the present disclosure, the one or more hardware processors 104 apply, a first reduction technique and a second reduction technique, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model. In other words, application of the first reduction technique and the second reduction technique on the hyper-dimensional search space results in the reduced hyper-dimensional search space comprising the set of reduced hyperparameters associated with the second hyperparameter dimension. In an embodiment, the first reduction technique is a Dimension-Reduction Iteration (DRI) technique, as known in the art. In an embodiment, the second reduction technique is a Volume-Reduction Iteration (VRI) technique as known in the art. In an embodiment, the first hyperparameter dimension is a categorical hyperparameter dimension, and the second hyperparameter dimension is a numerical hyperparameter dimension. It is to be understood by a person having ordinary skill in the art or person skilled in the art that such exemplary hyperparameter dimensions shall not be construed as limiting the scope of the present disclosure. The hyper-dimensional search space is based on the per iteration sample size, in one example embodiment.

At step 206 of the method of the present disclosure, the one or more hardware processors 104 iteratively apply, the first reduction technique and the second reduction technique, on the reduced hyper-dimensional search space comprising the second hyperparameter dimension to obtain an optimal set of hyperparameters. In other words, steps 204 and 206 are performed until a difference of an associated best performance metric between a current iteration and a previous iteration of the ML model is less than or equal to the termination threshold. The performance metric may comprise but is not limited to performance of the ML model, accuracy of the ML model, and so on. In an embodiment, the first reduction technique and the second reduction technique are concurrently applied during each iteration.

Below pseudo code illustrates the method of FIG. 2 for optimizing hyperparameters of machine learning models by using reduction iteration techniques:

Input: hyper-dimensional space $[h_L^1, h_R^1], \cdots, [h_L^d, h_R^d]$, where the subscripts L and R denote the left and right size of the parameter interval.

Input: dataset: $D$, per-iteration sample size: $N$, hyper-parameter dimension: $d$, termination threshold: $\alpha = 0.01$

1. initialization: $g\_params = None, p_{score} = 0, c_{score} = 0, g = 0$

2. do

3. $c_{score} = 0$

4. for k = 1 to N # intra-iteration loop

    a. for $i = 1$ to d

    b. if $h_R^i > h_L^i$ then

        i. $params[i] = random\_sample([h_L^i, h_R^i])$

    c. end if

    d. end for

    e. $score = model(params, D)$

    f. if $score > c_{score}$ then

        i. $c_{score} = score$

        ii. $g\_params = params$

    g. end if

5. end for

6. if $c_{score} - p_{score} < \alpha$:

    a. return $g\_params, g_{score}$

7. $p_{score} = c_{score}$

8. for i = 1 to d

    a. if $g\_params[i].type == CAT \& g == 0$ then

   i. $h_L^i = h_R^i = g\_params[i]$

   ii. $g = 1$

  b. else

   i. $\Delta_1 = g\_params[i] - h_L^i$

   ii. $\Delta_2 = h_R^i - g\_paramers[i]$

   iii. $\Delta = min(\Delta_1, \Delta_2)$

   iv. $h_L^i = g\_params[i] - \Delta/4$

   v. $h_R^i = g\_params[i] + \Delta/4$

  c. end if

 9. end for

In the above pseudo code, lines 1 through 4g indicate taking random sample on each hyper-parameter dimension within the range, wherein a score of the ML model is computed based on the sampled hyperparameter combination. The best score and hyperparameter is stored in memory 102/database 108. Lines 5 through 7 indicate performing a termination condition check. Remaining lines 8 through 9 indicate suppression of categorical hyperparameter dimensions, thereby outputting the range of numerical hyperparameter dimension.

The above pseudo code may be better understood by way of following description:

Consider a hyperparameter space (hyper-rectangle) consisting of both categorical and numerical (float and integer) hyperparameter space, per-iteration sample size, the termination condition. The suppression of categorical hyper-parameters and the volume reduction of numerical hyperparameters proceeds as described below:

1. Take a sample on each hyperparameter range and generate a random hyperparameter point *in params* in the hyperparameter space.
2. Run the ML model against the dataset *D*, and obtain the score (accuracy or balanced accuracy) of the ML model with respect to the sampled hyperparameter.

 a. point (combination).

3. Compare with the score with the value of $c_{score}$ (best one in the iteration)
4. If the *score* is greater than $c_{score}$, then update $c_{score}$ with the score and the *g_params with the values of the params*
5. If the number of samples is less than the per-iteration sample size, then go back to step 1) and continue processing.

 a. After one-iteration samples, the best score and best hyperparameter combination of the ML model is obtained over the sampled hyperparameter combinations,

6. Check the difference between two consecutive iterations. If the difference is less than the threshold if $c_{score} - p_{score} <$ $\alpha$ then return the caller with the best score and best hyperparameter. No further iteration.

 a. Otherwise, suppression and the numerical hyper-parameter volume reduction are as follows.

7. Go over each dimension in *g_params,* check whether the hyperparameter dimension is categorical or numerical.
8. If the hyperparameter is categorical (*g_params[i]. type = CAT and g == 0*), then assign the value of *g_params[i]* to both the left- and right-end of that categorical dimension and assign the *g* value as 1. The categorical dimension is accordingly suppressed.

9. If the hyperparameter is numerical, then create a smaller range $\left[h_L^i, h_R^i\right]$ centering around the value of *g_params* [*i*], which is the best hyperparameter from the iteration.

$$h_L^i = g\_params[i] - \Delta/4, \quad h_R^i = g\_params[i] + \Delta/4$$

10. Return 1) for the next iteration.

The above steps 204 and 206 are better understood by way of following exemplary description:

The system and method of the present disclosure consider an example of LogisticRregession as a ML model:

```
Hyperparameter configuration for First Iteration
          {"model": "classification", "algorithm": "LOGISTICREGRESSION",
          "hyperparameter": "'solver':['lbfgs', 'liblinear', 'newton-cg','newton-
          cholesky','sag','saga'],
          'multiclass':['auto','ovr','multinomial'],
          'C':['uniform',(0,1.0)],
          'max_iter':['randint',(7328,7597)],
          'penalty':['elasticnet','l1','l2'],
          'l1_ratio':['uniform',(0.0,1.0)],
          'tol':['uniform',(1e-6,1e-5)],
          'intercept_scaling':['uniform',(0.0,1.0)],
          "metric": "accuracy",
          "rescale": "normalize",
          "sample_size": 20}
```

After the first iteration, the sampled hyperparameter and score are obtained as follows in Table 3:

Table 3

| solver | multi_class | C | max_iter | penalty | intercept_scaling | l1_ratio | tol | accuracy |
|---|---|---|---|---|---|---|---|---|
| Lbfgs | auto | 0.4 54 | 7403 | elastic net | 0.034 | 0.454 5 | 0.5e -5 | 0.922 |
| sag | ovr | 0.2 78 | 7395 | l1 | 0.933 | 0.343 4 | 0.6e -5 | 0.913 |
| Saga | multino mial | 0.4 54 | 7573 | elastic net | 0.534 | 0.454 5 | 0.5e -5 | 0.952 |
| Liblin ear | ovr | 0.4 78 | 7339 | l1 | 0.133 | 0.343 4 | 0.6e -5 | 0.943 |
| Saga | multino mial | 0.4 54 | 7758 | elastic net | 0.174 | 0.808 8 | 0.3e -5 | 0.954 |
| newto n-choles ky | ovr | 0.2 78 | 7433 | l2 | 0.854 | 0.343 4 | 0.6e -5 | 0.903 |
| saga | auto | 0.4 54 | 7690 | l2 | 0.403 | 0.454 5 | 0.5e -5 | 0.943 |
| newto n-cg | ovr | 0.2 78 | 7503 | l1 | 0.933 | 0.643 4 | 0.6e -5 | 0.923 |
| newto n-choles ky | auto | 0.4 54 | 7389 | elastic net | 0.034 | 0.454 5 | 0.5e -5 | 0.904 |
| libline ar | auto | 0.1 22 | 7450 | l1 | 0.743 | 0.343 4 | 0.53 e-5 | 0.922 |
| .. | .. | ... | ... | .. | . | | . | .. |
| .... | ... | ... | ... | .... | .... | : | ... | ... |

Among the 10 random samples listed above, the best accuracy has been 0.954, and corresponding best sampled hyper-parameter is as in below Table 4 (best hyperparameter combination obtained after the first iteration):

Table 4

| solver | multi_class | C | max iter | penalty | intercept_scaling | l1_ratio | tol | accuracy |
|---|---|---|---|---|---|---|---|---|
| saga | multinom ial | 0.45 4 | 7758 | elastic net | 0.174 | 0.808 8 | 0.3 e-5 | 0.954 |

The dimension reduction iteration method reduces the categorical dimensions and shrinks the ranges of the numerical dimensions simultaneously as follows:

Suppressing categorical hyper-parameters: From Table 4, the values of *solver, multi_class,* and *penalty* dimensions are 'saga', 'multinomial' and *'elasticnet'.* Each categorical hyper-parameter dimension is then reduced to a single element. Consequently, no further exploration is required in these categorical dimensions.

Reducing the search scope for the numerical hyper-parameter space: for every best parameter value in numerical-typed dimension, a much narrower range is computed for subsequent iteration as follows:

$$\Delta = min(g\_params[i] - h_i^L, h_i^R - g\_params[i])$$

$$h_i^L = g\_param[i] - \Delta/4$$

$$h_i^R = g\_params[i] + \Delta/4$$

The hyperparameter configuration for the second iteration is derived from removing categorical dimensions and reducing the range of numerical dimensions. The value of C dimension for the first iteration is *0.8844,* range of the C dimension is calculated as, $\Delta$ = 0.1156, and the left- and right-end for second iteration are calculated as (0.85555083457,0.91333050074). The ranges of the numerical hyper-parameter dimensions such as *l1_ratio, intercept scaling,* and C for subsequent iteration are calculated and listed in hyper-parameter configuration in second iteration. As the termination condition $c_{score}$ - $p_{score}$ = 0.954368 - 0 = 0.954368 > $\alpha$, the reduction method performs the second iteration based on the reduced hyperparameter space specified in the following JavaScript Object Notation (JSON) format for second iteration.

Hyperparameter configuration for second iteration

{"model": "classification", "algorithm": "LOGISTICREGRESSION",

"hyperparameter":"'solver':['saga'],

'multi_class':['multinomial'],

'C':['uniform',( *0.85555,0.91333*)],

'max_iter':['randint',(7328,7597)],

'penalty':['elasticnet'],

'l1_ratio':['uniform',(*0.76102938083,0.8566176285*)],

'tol':['uniform',(1e-6,1e-5)],

'intercept_scaling':['uniform',(

*0.13097410199,0.21829016999*)]",

"metric": "accuracy",

"rescale": "normalize",

"sample_size": 20}

After the second iteration of the method of the present disclosure, the best result is given in Table 5. Comparing the accuracy of the second iteration with one obtained from the first one:

$$c_{score} - p_{score} = 0.960490 - 0.954368 = 0.006122 < \alpha = 0.01.$$

The dimension-reduction iteration method terminates and returns the results as shown in below Table 5 (Optimal hyper-parameter combination after second iteration).

Table 5

| Hyperparameter dimension | Optimal hyper-parameter combination |
|---|---|
| penalty | elasticnet |
| tol | 6.242636492935789e-05 |
| C | 0.8816418881059275 |
| intercept scaling | 0.1571994484141509 |
| solver | Saga |
| max_iter | 7467 |
| multi_class | Multinomial |
| l1_ratio | 0.799771245720644 |
| Score | 0.960490 |
| sample size | 20 |

In an embodiment, shrinkage (e.g., volume shrinkage, or normalized volume shrinkage and may be interchangeably used herein) of the hyper-dimensional search space between the current iteration and the previous iteration is at the rate of $(x/y)^d$ per-iteration, where d is a dimensionality of the second hyperparameter dimension, and where x and y are integer values. The shrinkage is understood by way of following expressions:

$$\Delta = min(g\_params[i] - h_i^L, h_i^R - g\_params[i]),$$

$$h_i^L = g\_param[i] - \Delta/4, \quad h_i^R = g\_params[i] + \Delta/4$$

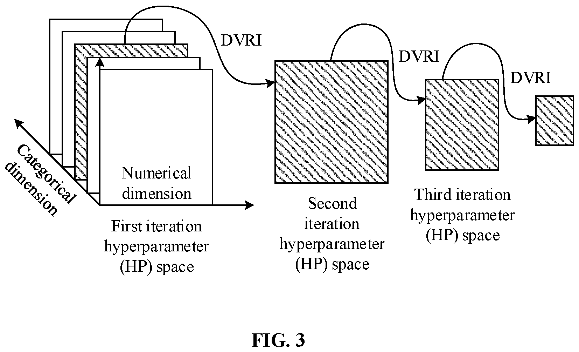

The volume shrinkage (also referred to as normalized volume shrinkage and interchangeably used herein) per iteration can be approximately as $(1/4)^d$, in one embodiment of the present disclosure, where x=1, and y=4, and such values of x and y shall not be construed as limiting the scope of the present disclosure. FIG. 3, with reference to FIGS. 1-2, depicts per-iteration volume shrinkage upon application of the first reduction technique and the second reduction technique on the hyperparameter space, in accordance with an embodiment of the present disclosure.

In the present disclosure, the system 100 and the method took a small number of samples on the high dimensional hyperparameter space to explore the location of the best optimal hyperparameter combination. Then system 100 makes use of the best hyperparameters in the sampled data to construct smaller hyperparameter space and compares the best performance in the sampled data with the previous one. The process is performed in an iterative fashion, until the performance gain in two consecutive steps is less than the termination threshold.

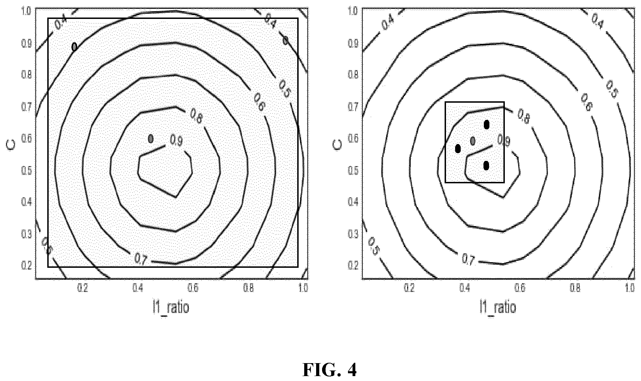

FIG. 4, with reference to FIGS. 1 through 3, depicts a graphical representation illustrating samples taking place in two consecutive iterations (left-side figure: dots representing the sampled points in the hyperparameter space, right-side figure: black dots representing the sampled points in the subsequent iteration), in accordance with an embodiment of the present disclosure. The rectangle in the left graph formed by the two best sampled points is used to narrow the hyperparameter space for subsequent iteration. More specifically, in FIG. 4, the objective of iteratively reducing the search space for the best hyperparameter. The method of the present disclosure uses the sampled information to effectively narrow the hyperparameter space for subsequent search in iteration. A small number of samples taken (on the left-side graph) in the preceding iteration, finding the two best sampled point to construct a rectangle, which is much smaller than the sampled hyperparameter space in the preceding hyperparameter space. In the subsequent iteration (on the right-side graph), the samples are taken on the much smaller space.

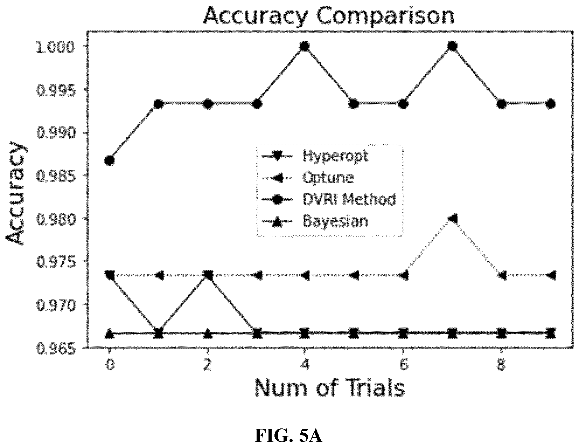

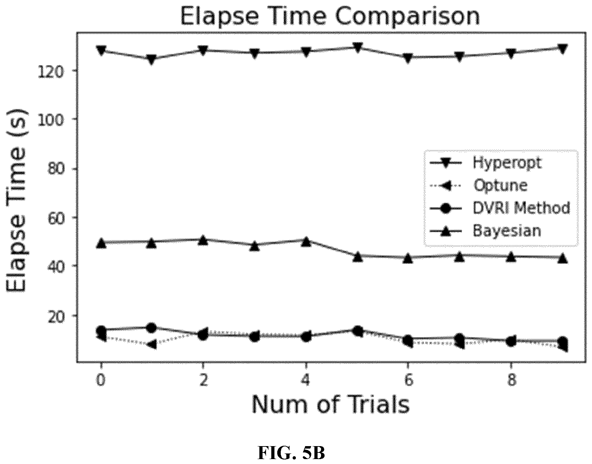

The dimension-reduction and the volume-reduction techniques based hyper-parameter optimization method outperforms the as known in the art approaches such as the open-sourced hyper-parameter optimizers (Hyperopt, Optune, Bayesian) in terms of both performance and cost (elapsed time). The performance comparison further solidifies the effectiveness and uniqueness of the dimension-reduction hyperparameter optimization system and method of the present disclosure. FIGS. 5A and 5B, with reference to FIGS. 1 through 4, depict a graphical representation illustrating performance comparison across various approaches. More specifically, FIGS. 5A and 5B depict a graphical representation illustrating performance comparison the method of FIG. 2 (DVRI) and conventional approaches (e.g., Hyperopt®,

Optune®, Bayesian optimization, etc.), in accordance with an embodiment of the present disclosure. More specifically, FIG. 5A provides performance comparison of the method of the present disclosure (DVRI method) with the open-source hyper-parameter optimizers. It shows that the method of the present disclosure (DVRI method) performs much better than Hyperopt, Optune, Bayesian hyper-parameter optimizers. FIG. 5B shows that the efficiency of the method of the present disclosure (DVRI method) outperforms both the Hyperopt and Bayesian optimizers and is comparable with Optune hyper-parameter optimizer.

Below description illustrates the first reduction technique and the second reduction technique implementation versus the conventional approaches.

1. Exhaustive Grid search - conventional approach: This is the most widely used method of hyperparameter optimization, and it exhaustively generates candidates from a grid of (discrete) parameter values: for a hyper-parameter grid.

param_grid = [{'C': [0.02, 0.04, 0.06, 0.08,0.1,0.12,0.14,0.16,0.18,0.20],

'solver': ['lbfgs','liblinear','newton-cg','sag','saga'],

'penalty': ['l1','l2','elasticnet'],

'l1_ratio':[0.02, 0.04, 0.06, 0.08,0.1,0.12,0.14,0.16,0.18,0.20]}]

The total number of exhaustive grid searches in this case is 10*10*3*5=1500. A shortcoming is that fine-grid exhaustive grid search is extremely costly as it exhaustively examines all grid points, while the coarse grid search is likely to produce suboptimal results.

2. Randomized parameter search - conventional approach: This exhaustively generates candidates from a grid of (discrete) parameter values: for a hyper-parameter grid

param_grid = [ {'C': [0.02, 0.04, 0.06, 0.08,0.1,0.12,0.14,0.16,0.18,0.20],

'solver': ['lbfgs','liblinear','newton-cg','sag','saga'],

'penalty': ['l1','l2','elasticnet'],

'l1_ratio':[0.02, 0.04, 0.06, 0.08,0.1,0.12,0.14,0.16,0.18,0.20]}]

Randomized parameter optimization implements a randomized search over parameters, where the value for each parameter dimension is sampled from a distribution over possible parameter values.

```
{
    'C': scipy.stats.uniform(),
    'solver': ['lbfgs','liblinear','newton-cg','sag','saga'],
    'penalty': ['l1','l2','elasticnet'],
    'l1_ratio': scipy.stats.uniform()
}
```

The value under the C dimension is generated from the uniform distribution. The key difference between the proposed dimension reduction iteration and the randomized search is that the proposed DRI method reduces the dimensionality and volume of hyper-parameter space during processing while the hyper-parameter space is intact for the randomized hyper-parameter search.

3. Hyperopt optimization: distributed asynchronous hyperparameter optimization - conventional approach: This approach is primarily based on random search and tree-structure Parzen estimator (TPE). It implements a randomized search over parameters, where the value for each parameter dimension is sampled from a distribution over possible parameter values and evaluates all generated hyperparameters to achieve the best parameter. The key difference between the dimension and volume reduction iteration techniques of the method of the present disclosure and the randomized search is that the dimension and volume reduction iteration techniques of the method of the present disclosure reduces the dimensionality and volume of hyperparameter space during processing while the hyper-parameter space is intact for the randomized hyper-parameter search.

4. Bayesian optimization for hyperparameter tuning - conventional approach: This implements Bayesian method, which is built on top of Hyperopt and TPE. It generates the random values for parameter dimensions over predefined distributions over hyper-parameter values and then uses a Bayesian method to identify the best hyper-parameters. The method is computationally expensive. The key difference between the proposed dimension reduction iteration and the randomized search is that the proposed DRI method reduces the dimensionality and volume of hyper-parameter space during processing while the hyper-parameter space is intact for the randomized hyper-parameter search.

5. Optuna - conventional approach: Is framework agnostic approach: It employs tree-structure Parzen estimator and random sampling for searching the optimal hyperparameter combination in hyper-parameter space. The dimension and volume reduction iteration techniques of the method of the present disclosure presents a more efficient way than Optuna in the hyper-parameter space reduction.

The present disclosure provides systems and methods in the unique combination of dimension-reduction and volume-reduction iteration techniques that effectively reduces the computational overhead and energy consumption in machine learning, resulting in significantly enhanced efficiency compared to randomized grid search and hyper-parameter optimizers such as Hyperopt, Optune, and Bayesian optimizers as known in the art.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

    receiving, via one or more hardware processors, a hyper-dimensional search space, a per iteration sample size, one or more associated hyperparameter dimensions, and a termination threshold pertaining to a machine learning (ML) model (202), wherein the hyper-dimensional search space comprises a plurality of hyperparameters associated with (i) a first hyperparameter dimension, (ii) a second hyperparameter dimension;
    applying, a first reduction technique and a second reduction technique via the one or more hardware processors, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model (204), wherein the hyper-dimensional search space is based on the per iteration sample size; and
    iteratively applying, the first reduction technique and the second reduction technique via the one or more hardware processors, on the reduced hyper-dimensional search space comprising the second hyperparameter dimension to obtain an optimal set of hyperparameters,
    until a difference of an associated best performance metric between a current iteration and a previous iteration of the ML model is less than or equal to the termination threshold (206).

2. The processor implemented method as claimed in claim 1, wherein shrinkage of the hyper-dimensional search space between the current iteration and the previous iteration is at the rate of $(x/y)^d$ per-iteration, where d is a dimensionality of the second hyperparameter dimension, and x and y are integer values.

3. The processor implemented method as claimed in claim 1, wherein the first reduction technique is a Dimension-Reduction Iteration (DRI) technique, and wherein the second reduction technique is a Volume-Reduction Iteration (VRI) technique.

4. The processor implemented method as claimed in claim 1, wherein the first reduction technique and the second reduction technique are concurrently applied during each iteration.

5. The processor implemented method as claimed in claim 1, wherein the first hyperparameter dimension is a categorical hyperparameter dimension, and the second hyperparameter dimension is a numerical hyperparameter dimension.

6. A system (100), comprising:

    a memory (102) storing instructions;
    one or more communication interfaces (106); and
    one or more hardware processors (104) coupled to the memory (102) via the one or more communication interfaces (106), wherein the one or more hardware processors (104) are configured by the instructions to:

    receive a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension;
    apply, a first reduction technique and a second reduction technique, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search space is based on the per iteration sample size; and
    iteratively apply, the first reduction technique and the second reduction technique, on the reduced hyper-dimensional search space comprising the second hyperparameter dimension to obtain an optimal set of hyperparameters,

until a difference of an associated best performance metric between a current iteration and a previous iteration of the ML model is less than or equal to the termination threshold.

7. The system as claimed in claim 6, wherein shrinkage of the hyper-dimensional search space between the current iteration and the previous iteration is at the rate of $(x/y)^d$ per-iteration, where d is a dimensionality of the second hyperparameter dimension, and x and y are integer values.

8. The system as claimed in claim 6, wherein the first reduction technique is a Dimension-Reduction Iteration (DRI) technique, and wherein the second reduction technique is a Volume-Reduction Iteration (VRI) technique.

9. The system as claimed in claim 6, wherein the first reduction technique and the second reduction technique are concurrently applied during each iteration.

10. The system as claimed in claim 6, wherein the first hyperparameter dimension is a categorical hyperparameter dimension, and the second hyperparameter dimension is a numerical hyperparameter dimension.

11. One or more non-transitory machine-readable information storage mediums comprising one or more instructions which when executed by one or more hardware processors cause:

receiving a hyper-dimensional search space, a per iteration sample size, one or more associated hyperparameter dimensions, and a termination threshold pertaining to a machine learning (ML) model , wherein the hyper-dimensional search space comprises a plurality of hyperparameters associated with (i) a first hyperparameter dimension, (ii) a second hyperparameter dimension;
applying a first reduction technique and a second reduction technique on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model , wherein the hyper-dimensional search space is based on the per iteration sample size; and
iteratively applying the first reduction technique and the second reduction technique on the reduced hyper-dimensional search space comprising the second hyperparameter dimension to obtain an optimal set of hyperparameters,
until a difference of an associated best performance metric between a current iteration and a previous iteration of the ML model is less than or equal to the termination threshold.

12. The one or more non-transitory machine-readable information storage mediums as claimed in claim 11, wherein shrinkage of the hyper-dimensional search space between the current iteration and the previous iteration is at the rate of $(x/y)^d$ per-iteration, where d is a dimensionality of the second hyperparameter dimension, and x and y are integer values.

13. The one or more non-transitory machine-readable information storage mediums as claimed in claim 11, wherein the first reduction technique is a Dimension-Reduction Iteration (DRI) technique, and wherein the second reduction technique is a Volume-Reduction Iteration (VRI) technique.

14. The one or more non-transitory machine-readable information storage mediums as claimed in claim 11, wherein the first reduction technique and the second reduction technique are concurrently applied during each iteration.

15. The one or more non-transitory machine-readable information storage mediums as claimed in claim 11, wherein the first hyperparameter dimension is a categorical hyperparameter dimension, and the second hyperparameter dimension is a numerical hyperparameter dimension.

SYSTEM
100

MEMORY
102

DATABASE
108

HARDWARE PROCESSOR(S)
104

INTERFACE(S)
106

**FIG. 1**

receiving, via one or more hardware processors, a hyper-dimensional search space, a per iteration sample size, one or more associated hyperparameter dimensions, and a termination threshold pertaining to a machine learning (ML) model, wherein the hyper-dimensional search space comprises a plurality of hyperparameters associated with (i) a first hyperparameter dimension, (ii) a second hyperparameter dimension

202

applying, a first reduction technique and a second reduction technique via the one or more hardware processors, on the hyper-dimensional search space comprising at least a subset of the plurality of hyperparameters associated with (i) the first hyperparameter dimension, (ii) the second hyperparameter dimension, to obtain a reduced hyper-dimensional search space comprising a set of reduced hyperparameters associated with the second hyperparameter dimension, and a best performance metric of the ML model, wherein the hyper-dimensional search space is based on the per iteration sample size

204

iteratively applying, the first reduction technique and the second reduction technique via the one or more hardware processors, on the reduced hyper-dimensional search space comprising the second hyperparameter dimension to obtain an optimal set of hyperparameters,
until a difference of an associated best performance metric between a current iteration and a previous iteration of the ML model is less than or equal to the termination threshold

206

**FIG. 2**

**FIG. 3**

**FIG. 4**

FIG. 5A

**FIG. 5B**

| | **EUROPEAN SEARCH REPORT** | | **Application Number** |
|---|---|---|---|
| | | | EP 25 15 9658 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEN YAN ET AL: "Efficient and Joint Hyperparameter and Architecture Search for Collaborative Filtering", PROCEEDINGS OF THE FIFTEENTH INTERNATIONAL CONFERENCE ON PREDICTIVE MODELS AND DATA ANALYTICS IN SOFTWARE ENGINEERING, ACM, NEW YORK, NY, USA, 6 August 2023 (2023-08-06), pages 2547-2558, XP098084742, DOI: 10.1145/3580305.3599322 ISBN: 978-1-4503-7233-6 * sections 3-4, Appendix * | 1-15 | INV. G06N5/01 G06N20/00 |
| A | CN 115 457 941 A (UNIV NANJING POSTS & TELECOMMUNICATIONS) 9 December 2022 (2022-12-09) * the whole document * | 1-15 | |
| A | ZEBIN YANG ET AL: "Hyperparameter Optimization via Sequential Uniform Designs", ARXIV.ORG, CORNELL UNIVERSITY LIBRARY, 201 OLIN LIBRARY CORNELL UNIVERSITY ITHACA, NY 14853, 8 September 2020 (2020-09-08), XP081758122, * the whole document * | 1-15 | **TECHNICAL FIELDS SEARCHED (IPC)** G06N |
| A | US 2022/027746 A1 (VARADARAJAN VENKATANATHAN [US] ET AL) 27 January 2022 (2022-01-27) * the whole document * | 1-15 | |
| A | US 2022/051138 A1 (STOLL DANNY [DE] ET AL) 17 February 2022 (2022-02-17) * the whole document * | 1-15 | |

The present search report has been drawn up for all claims

| Place of search | Date of completion of the search | Examiner |
|---|---|---|
| The Hague | 23 June 2025 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9658

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | | Publication date | Patent family member(s) | | Publication date |
|---|---|---|---|---|---|
| CN 115457941 | A | 09-12-2022 | NONE | | |
| US 2022027746 | A1 | 27-01-2022 | CN | 111149117 A | 12-05-2020 |
| | | | CN | 117057446 A | 14-11-2023 |
| | | | EP | 3688681 A1 | 05-08-2020 |
| | | | US | 2019095818 A1 | 28-03-2019 |
| | | | US | 2022027746 A1 | 27-01-2022 |
| | | | WO | 2019067931 A1 | 04-04-2019 |
| US 2022051138 | A1 | 17-02-2022 | CN | 114077899 A | 22-02-2022 |
| | | | DE | 102020210352 A1 | 17-02-2022 |
| | | | US | 2022051138 A1 | 17-02-2022 |

EPO FORM P0459

For more details about this annex : see Official Journal of the European Patent Office, No. 12/82

**REFERENCES CITED IN THE DESCRIPTION**

**Patent documents cited in the description**

• IN 202421015031